# EUROPEAN PATENT SPECIFICATION

(11) **EP 2 436 543 B1**
(45) Date of publication and mention of the grant of the patent: **05.09.2018**
(21) Application number: 10780219.1
(22) Date of filing: 18.05.2010
(51) Int. Cl.: B60H 1/32, F25B 31/00, F25D 23/00

(54) **REFRIGERATION DEVICE FOR TRAILER**
KÜHLVORRICHTUNG FÜR EINEN ANHÄNGER
DISPOSITIF DE RÉFRIGÉRATION POUR REMORQUE

(30) Priority: 25.05.2009 JP 2009125148
(43) Date of publication of application: 04.04.2012
(73) Proprietor: Daikin Industries, Ltd., Osaka-shi, Osaka 530-8323 (JP)
(72) Inventor: IKEMIYA, Makoto, Osaka-shi Osaka 530-8323 (JP); MATSUI, Kazuyasu, Sakai-shi Osaka 591-8511 (JP)
(74) Representative: Hoffmann Eitle
(86) International application number: PCT/JP2010/003349
(87) International publication number: WO 2010/137258

(56) References cited:
- EP-A1- 1 308 330
- EP-A1- 1 512 565
- JP-A- 62 091 773
- JP-A- 2000 043 560
- JP-A- 2002 286 360
- JP-A- 2003 048 424
- JP-A- 2003 097 881
- JP-A- 2004 324 615
- JP-A- 2007 113 874
- KR-A- 20080 055 174
- US-A1- 2002 112 492
- US-B1- 6 543 244

## Description

### TECHNICAL FIELD

The present invention relates to a trailer refrigerating apparatus for cooling an in-compartment space of a trailer.

### BACKGROUND ART

As a refrigerating apparatus for cooling an inside of a compartment, a trailer refrigerating apparatus for cooling an in-compartment space of a trailer of a refrigerated vehicle has been known. JP 2009-052833 A discloses the trailer refrigerating apparatus of this type.

The trailer refrigerating apparatus includes a casing attached to an open section at a front end of the trailer and a cooling section supported by the casing and cooling the inside of the compartment. The cooling section is configured by an evaporator connected to a refrigerant circuit. That is, in the trailer refrigerating apparatus, refrigerant circulates in the refrigerant circuit to perform a vapor compression refrigeration cycle. Thus, refrigerant is evaporated by absorbing heat from in-compartment air in the evaporator provided inside the compartment, thereby cooling the in-compartment air.

Note that, in the trailer refrigerating apparatus of JP 2009-052833 A, a generator and a generator engine are provided, and an electric compressor is driven by power of the generator to circulate refrigerant.

### CITATION LIST

### PATENT DOCUMENT

A trailer refrigerating apparatus having the features defined in the preamble of claim 1 is disclosed in EP 1 512 565 A1.

### SUMMARY OF THE INVENTION

### TECHNICAL PROBLEM

In the trailer refrigerating apparatus using the electric compressor as in the foregoing, power of the generator is supplied through an inverter circuit, and therefore an efficient operation of the electric compressor can be expected. However, in the trailer refrigerating apparatus, the engine, the generator, etc. are accommodated in the single casing, and cooling of the inverter circuit (e.g., a switching device) is not taken into consideration.

The present invention has been made in view of the foregoing problem, and it is an objective of the present invention to cool an inverter circuit in a trailer refrigerating apparatus.

### SOLUTION TO THE PROBLEM

In order to solve the foregoing problems, a first aspect of the invention is intended for a trailer refrigerating apparatus including the features of claim 1.

In the foregoing configuration, the generator (40), the engine (41), the inverter section (70), and the electric compressor (22) are accommodated in the single casing unit (31). The cooling section (26, 40a, 90, 95) cools the inverter section (70) of the casing unit (31) by air outside the compartment of the trailer (11).

A second aspect of the invention is intended for the trailer refrigerating apparatus of the first aspect of the invention, in which the generator (40) includes a generator cooling fan (40a) for cooling the generator (40) by air outside the compartment, and the cooling section (26, 40a, 90, 95) is the generator cooling fan (40a).

According to the foregoing configuration, when the generator (40) is driven, the generator cooling fan (40a) is driven. This allows the generator cooling fan (40a) to send air to the generator (40) and cool the generator (40). An air flow is formed in the casing unit (31) in association with an air flow generated in the foregoing state.

A third aspect of the invention is intended for the trailer refrigerating apparatus of the second aspect of the invention, in which the inverter section (70) is arranged upstream the generator cooling fan (40a).

According to the foregoing configuration, the inverter section (70) is cooled by air before a temperature of the air is increased by the generator (40).

A fourth aspect of the invention is intended for the trailer refrigerating apparatus of the first aspect of the invention, in which the cooling section (26, 40a, 90, 95) is an outside-compartment fan (26) for a condenser (23) of the refrigerant circuit (21).

According to the foregoing configuration, when the outside-compartment fan (26) for the condenser (23) is driven, the outside-compartment fan (26) cools the inverter section (70) by air outside the compartment.

A fifth aspect of the invention is intended for the trailer refrigerating apparatus of the fourth aspect of the invention, in which the cooling section (26, 40a, 90, 95) further includes a duct (95), both ends of which open in an upstream side of the outside-compartment fan (26) and the inverter section (70), respectively.

According to the foregoing configuration, when the outside-compartment fan (26) is driven, the upstream side of the outside-compartment fan (26) is under negative pressure, and air is sucked through an opening of the duct (95) closer to the outside-compartment fan (26). Thus, air around an opening of the duct (95) closer to the inverter section (70) is sucked into the duct (95). That is, the inverter section (70) is cooled by an air flow through the duct (95).

A sixth aspect of the invention is intended for the trailer refrigerating apparatus of the second aspect of the invention, in which the cooling section (26, 40a, 90, 95) further includes an auxiliary cooling fan (90) for injecting air outside the compartment to the inverter section (70).

According to the foregoing configuration, the inverter section (70) is cooled by the auxiliary cooling fan (90).

A seventh aspect of the invention is intended for the trailer refrigerating apparatus of the sixth aspect of the invention, in which the auxiliary cooling fan (90) is configured to be driven when the generator (40) is stopped.

According to the foregoing configuration, the auxiliary cooling fan (90) can be driven regardless of an operation state of the generator (40).

An eighth aspect of the invention is intended for the trailer refrigerating apparatus of the sixth aspect of the invention, in which the cooling section (26, 40a, 90, 95) starts the auxiliary cooling fan (90) when a temperature of the inverter section (70) exceeds a predetermined threshold.

According to the foregoing configuration, when the temperature of the inverter section (70) exceeds the threshold, the auxiliary cooling fan (90) is started to cool the inverter section (70).

### ADVANTAGES OF THE INVENTION

According to the first aspect of the invention, since the inverter section (70) is cooled by the cooling section (26, 40a, 90, 95), the inverter section (70) can be stably operated. In the trailer refrigerating apparatus, power is supplied by the inverter section (70), and therefore an efficient operation of the electric compressor (22) can be expected.

According to the second aspect of the invention, the air flow is formed in the casing unit (31) by the generator cooling fan (40a), thereby cooling the inverter section (70) by air outside the compartment.

According to the third aspect of the invention, the inverter section (70) can be more efficiently cooled.

According to the fourth aspect of the invention, the air flow is formed in the casing unit (31) by the outside-compartment fan (26), thereby cooling the inverter section (70) by air outside the compartment.

According to the fifth aspect of the invention, since the duct (95) is provided, the inverter section (70) can be more efficiently cooled.

According to the sixth aspect of the invention, e.g., when cooling capacities of the generator cooling fan (40a) etc. are lacked, cooling of the inverter section (70) can be ensured by the auxiliary cooling fan (90).

According to the seventh aspect of the invention, the auxiliary cooling fan (90) can be driven regardless of the operation state of the generator (40). Thus, e.g., in a case where a power supply from the generator (40) is stopped when the trailer (11) is in park, and the electric compressor (22) is operated by, e.g., a commercial power supply, the inverter section (70) can be cooled.

According to the eighth aspect of the invention, when the temperature of the inverter section (70) exceeds the threshold, the auxiliary cooling fan (90) is started. Thus, the temperature of the inverter section (70) can be maintained at a temperature equal to or lower than a predetermined value.

### BRIEF DESCRIPTION OF THE DRAWINGS

[FIG. 1] FIG. 1 is a view of an entire configuration of a refrigerated vehicle and a trailer refrigerating apparatus.
[FIG. 2] FIG. 2 is a perspective view illustrating an entire configuration of an open section of a trailer and the trailer refrigerating apparatus.
[FIG. 3] FIG. 3 is a schematic configuration diagram of a refrigerant circuit of the trailer refrigerating apparatus.
[FIG. 4] FIG. 4 is a longitudinal section view illustrating a schematic configuration of the trailer refrigerating apparatus.
[FIG. 5] FIG. 5 is a perspective view of an outside-compartment casing.
[FIG. 6] FIG. 6 is a perspective view illustrating the trailer refrigerating apparatus in a state in which a front cover is detached.
[FIG. 7] FIG. 7 is an enlarged view of a first electric component box.
[FIG. 8] FIG. 8 is a view illustrating a cross section near a side edge portion of the open section of the trailer.
[FIG. 9] FIG. 9 is a perspective view illustrating the trailer refrigerating apparatus in the state in which the front cover is detached, and illustrates a flow of outdoor air.

### DESCRIPTION OF EMBODIMENTS

An embodiment of the present invention will be described below with reference to the drawings. Note that the embodiment described below will be set forth merely for purposes of preferred examples in nature, and is not intended to limit the present invention or the applications or scope thereof.

### <<Summary of the Embodiment>>

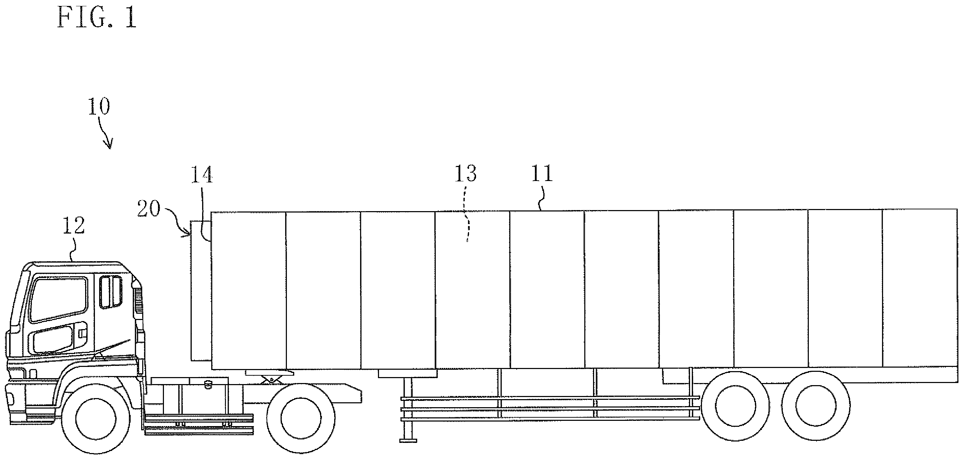

As illustrated in FIG. 1, a trailer refrigerating apparatus (20) of the present embodiment is mounted in a refrigerated vehicle (10) for transporting frozen food, fresh food, etc. by road or rail. The refrigerated vehicle (10) includes a trailer (11) in which freight such as frozen food is stored, and a tractor (12) for towing the trailer (11).

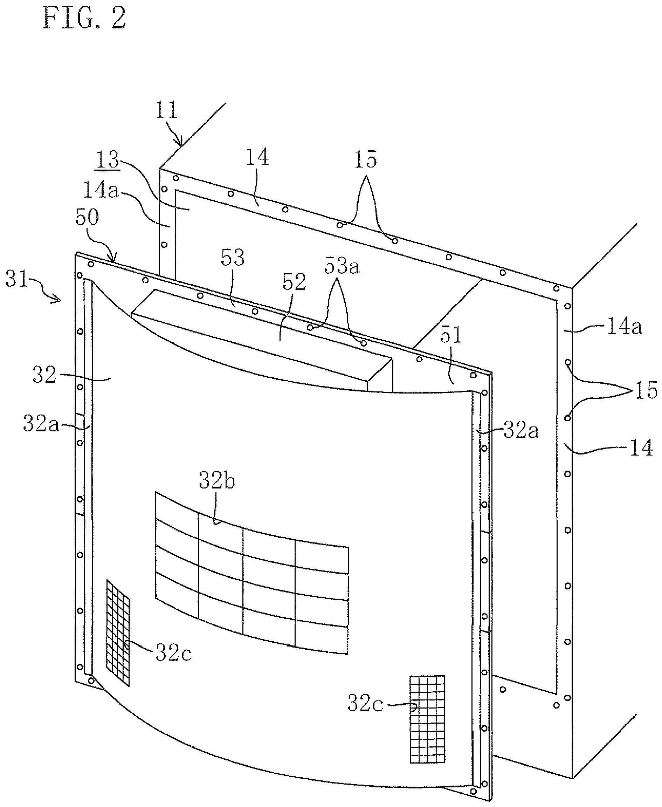

The trailer (11) is formed in an elongated rectangular parallelepiped box shape extending in a longitudinal direction and opening at a front end. An in-compartment space (13) is formed inside the trailer (11), and frozen food, fresh food, etc. are stored in the in-compartment space (13). As illustrated in FIG. 2, a rectangular frame-shaped open section (14) is formed at the front end of the trailer (11). A plurality of screw fixing sections (15) for attaching the trailer refrigerating apparatus (20) are formed in a front end surface of the open section (14). For example, eight of the plurality of screw fixing sections (15) are arranged at equal intervals in each of four sides of the open section (14). A configuration of the trailer refrigerating apparatus (20) will be described below in detail.

### Configuration of Trailer Refrigerating Apparatus (20)

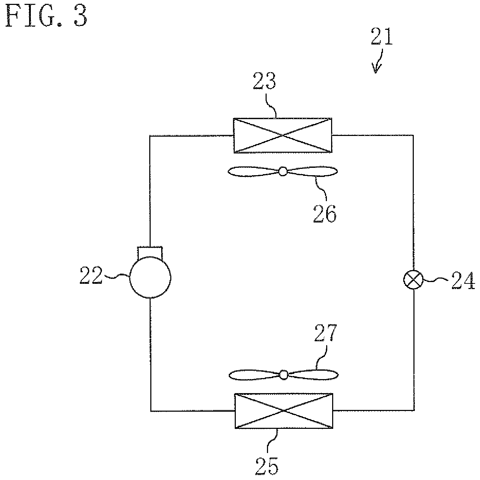

The trailer refrigerating apparatus (20) serves as a cooling apparatus for cooling air in the in-compartment space (13) of the refrigerated vehicle (10). As illustrated in FIG. 3, the trailer refrigerating apparatus (20) includes a refrigerant circuit (21) filled with refrigerant. In the refrigerant circuit (21), an electric compressor (22), a condenser (23), an expansion valve (24), and an evaporator (25) are connected together. In the refrigerant circuit (21), refrigerant circulates to perform a vapor compression refrigeration cycle. An outside-compartment fan (26) is provided near the condenser (23). In the condenser (23), heat is exchanged between outside-compartment (outdoor) air delivered by the outside-compartment fan (26) and refrigerant. An in-compartment fan (27) is provided near the evaporator (25). In the evaporator (25), heat is exchanged between in-compartment air delivered by the in-compartment fan (27) and refrigerant. The evaporator (25) serves as a cooling section for cooling air in the in-compartment space (13) of the trailer (11).

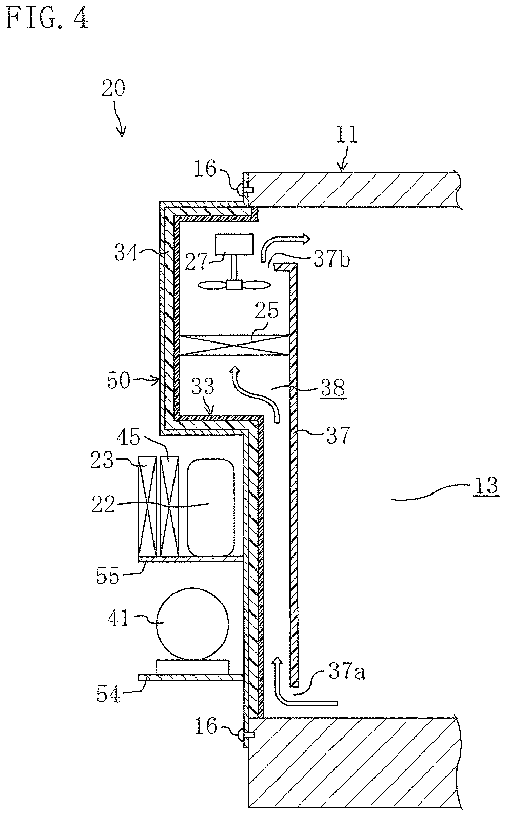

As illustrated in FIG. 2, the trailer refrigerating apparatus (20) includes a casing unit (31) attached to the open section (14) of the trailer (11). The casing unit (31) includes a front cover (32), an outside-compartment casing (50), and an in-compartment casing (33) (see FIG. 4).

### <Front Cover (32)>

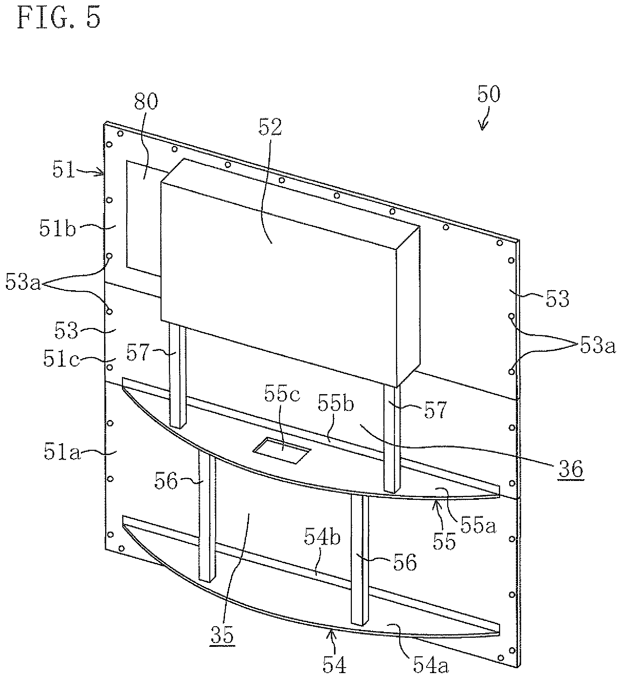

The front cover (32) is detachable from a front surface of the outside-compartment casing (50). The front cover (32) is a plate-shaped member which is curved so that a middle portion of the front cover (32) in a width direction thereof (horizontal direction as viewed in FIG. 2) protrudes toward front. Side portions (32a) at both ends of the front cover (32) in the width direction thereof are held by the outside-compartment casing (50). This forms machine chambers (35, 36) (see FIG. 5) in each of which various components (details will be described later) are accommodated, between a rear surface of the front cover (32) and the front surface of the outside-compartment casing (50).

A single middle inlet (32b) and two side inlets (32c) are provided in the front cover (32). The middle inlet (32b) is formed in substantially the center of the front cover (32). One of the side inlets (32c) is formed closer to a bottom and a left end of the front cover (32), and the other side inlet (32c) is formed closer to the bottom and a right end of the front cover (32).

Although not shown in the figure, a plurality of doors for maintenance of the trailer refrigerating apparatus (20) are provided in the front cover (32). Specifically, the plurality of doors are provided in, e.g., a portion of the front cover (32), which faces a generator (40) or an engine (41) which will be described later, a portion of the front cover (32), which faces a first electric component box (43), and a portion of the front cover (32), which faces a second electric component box (44).

### <Outside-Compartment Casing (50)>

The outside-compartment casing (50) is provided outside the trailer (11). The outside-compartment casing (50) is made of aluminum material. The outside-compartment casing (50) includes a square plate-shaped base (51) and a protruding portion (52) formed in an upper part of the base (51) (see FIGS. 2, 4, and 5).

The base (51) is configured by connecting three separate bodies (51a, 51b, 51c) together in a vertical direction. That is, the base (51) includes the lower base portion (51a) provided closer to a bottom of the base (51), the upper base portion (51b) provided closer to a top of the base (51), and the middle base portion (51c) positioned between the lower base portion (51a) and the upper base portion (51b).

A plurality of bolt holes (53a) into each of which a bolt (16) is inserted are formed in an outer edge portion (53) of the base (51). For example, eight of the plurality of bolt holes (53a) are arranged at equal intervals in each of four sides of the outer edge portion (53) of the base (51). The bolts (16) each inserted into the bolt hole (53a) are screwed in the screw fixing sections (15) in a state in which the outer edge portion (53) of the base (51) and the open section (14) of the trailer (11) closely contact each other, thereby fixing the outside-compartment casing (50) to the trailer (11).

In a state in which the outside-compartment casing (50) is fixed to the trailer (11), the open section (14) of the trailer (11) is closed by the outside-compartment casing (50). That is, the outside-compartment casing (50) functions as a closing member of the open section (14) of the trailer (11). When the open section (14) is closed, a ventilation port cannot be provided across an entire surface of a trailer as in a conventional refrigerated vehicle. Thus, in the present embodiment, a ventilation port (80) is provided to ventilate a compartment as illustrated in FIG. 5. Specifically, the ventilation port (80) is formed in a left part of the upper base portion (51b) as viewed in FIG. 5. The ventilation port (80) is openable by a motor, and is communicated with the compartment of the trailer (11) when the ventilation port (80) is opened. Opening/closing of the ventilation port (80) (control of the motor) is controlled by an operation panel (44a) which will be described later.

In addition, in the state in which the outside-compartment casing (50) is fixed to the trailer (11), the open section (14) of the trailer (11) is reinforced by the outer edge portion (53) of the outside-compartment casing (50). That is, the outside-compartment casing (50) also functions as a reinforcing member of the open section (14) of the trailer (11).

The protruding portion (52) is made of aluminum material so as to be integrally formed with the base (51), and protrudes from the base (51) toward front. The protruding portion (52) is formed in a rectangular parallelepiped box shape which has flat front and rear surfaces and opens on a rear surface side (see FIG. 4). Note that the protruding portion (52) may be made of, e.g., resin material, and may be integrally connected to the base (51).

The outside-compartment casing (50) includes a lower plate (54) and an upper plate (55). The lower plate (54) is provided closer to a lower end of the base (51), and the upper plate (55) is provided in a middle portion of the base (51) in the vertical direction (provided between the lower plate (54) and the protruding portion (52)). Each of the plates (54, 55) includes an arch-shaped supporting plate portion (54a, 55a). The supporting plate portion (54a, 55a) defines an arc-shaped surface on a front side, and defines a flat surface along a front surface of the base (51) on a rear side. Each of the plates (54, 55) includes a bent portion (54b, 55b) formed by upwardly bending the supporting plate portion (54a, 55a) at a rear end thereof. The bent portion (54b, 55b) is formed in a plate shape extending in the horizontal direction. The bent portion (54b, 55b) is fasten on the base (51) with rivets, thereby fixing each of the plates (54, 55) to the base (51). A communication port (55c) is provided in a middle part of the supporting plate portion (55a) of the upper plate (55) in the horizontal direction.

In the state in which the front cover (32) is attached to the outside-compartment casing (50), the first machine chamber (35) is defined between the lower plate (54) and the upper plate (55). In addition, the second machine chamber (36) is defined above the upper plate (55). The first machine chamber (35) and the second machine chamber (36) are communicated with each other through the communication port (55c) of the upper plate (55). In addition, the first machine chamber (35) is communicated with the two side inlets (32c), and the second machine chamber (36) is communicated with the middle inlet (32b).

The outside-compartment casing (50) includes two lower pillars (56) and two upper pillars (57). The lower pillars (56) are interposed between the lower plate (54) and the upper plate (55). The upper pillars (57) are interposed between the upper plate (55) and the protruding portion (52). Each of the pillars (56, 57) is made of aluminum material, and is formed in a vertically extending prism shape.

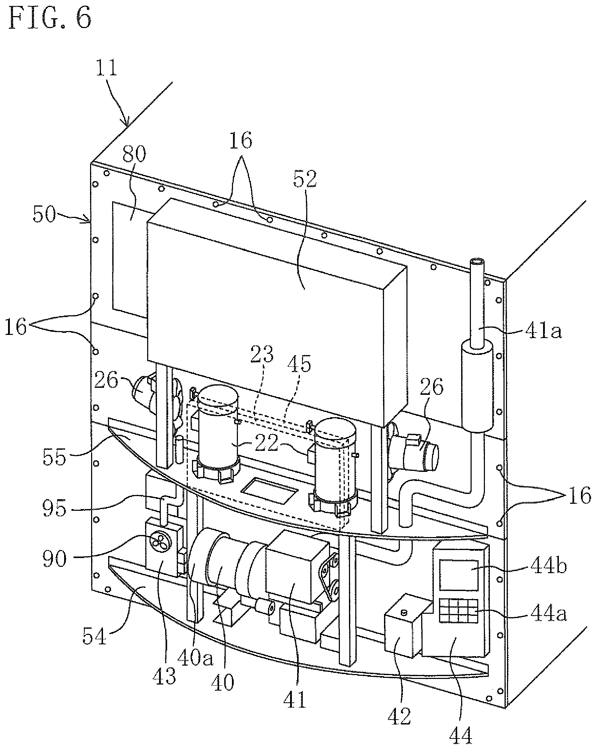

As illustrated in FIG. 6, in the first machine chamber (35), the generator (40), the engine (41), a battery (42), the plurality of electric component boxes (43, 44) are provided. Specifically, in the first machine chamber (35), the generator (40) and the engine (41) are mounted in a middle position of the lower plate (54) in the horizontal direction. The engine (41) is for driving the generator (40). In addition, the generator (40) is for generating power for driving the electric compressor (22) etc.

An exhaust muffler (41a) is provided in the engine (41). As illustrated in FIG. 6, the exhaust muffler (41a) extends toward the right of the engine (41), and then upwardly extends through the upper plate (55) before the exhaust muffler (41a) reaches the second electric component box (44). A muffler body of the exhaust muffler (41a) is positioned in a space closer to an upper right side in the second machine chamber (36). That is, the exhaust muffler (41a) is in a position apart from the ventilation port (80), and therefore exhaust air from the exhaust muffler (41a) does not enter the ventilation port (80).

A generator cooling fan (40a) is provided in the generator (40). The generator cooling fan (40a) is attached to a rear end (end on a side opposite to an end to which the engine (41) is connected) of the generator (40), and rotates together with a drive shaft of the generator (40). That is, the generator cooling fan (40a) rotates in synchronism with the engine (41). The generator cooling fan (40a) cools the generator (40) by sucking air from a space at the rear end of the generator (40) and sending the air to the generator (40).

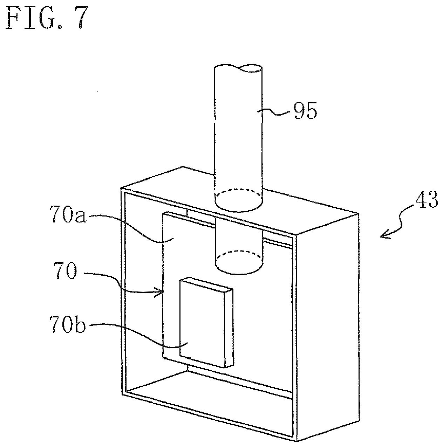

In the first machine chamber (35), the first electric component box (43) is provided in a space at the left of the generator (40), and the second electric component box (44) is provided in a space at the right of the engine (41). As illustrated in FIG. 7, an inverter section (70) is accommodated in the first electric component box (43). That is, in the present embodiment, the inverter section (70) is arranged on an upstream side of the generator cooling fan (40a).

The inverter section (70) includes a converter circuit and an inverter circuit, and is formed on a circuit board (70a). The inverter section (70) converts power output from the generator (40) into AC power having predetermined voltage and a predetermined frequency by the converter circuit and the inverter circuit, and supplied the AC power to the electric compressor (22) etc. A switching device (70b) is provided in the inverter section (70) in order to perform the foregoing power conversion. A cooling fin (not shown in the figure) is attached to the switching device (70b).

An auxiliary cooling fan (90) for injecting outside-compartment air to the inverter section (70) is provided near the first electric component box (43). The auxiliary cooling fan (90) is a so-called "propeller fan." Power can be supplied to the auxiliary cooling fan (90) from both of the inverter section (70) and a stand-by power supply (not shown in the figure). The stand-by power supply is a power supply for supplying power to the trailer refrigerating apparatus (20) when the generator (40) and the engine (41) are not driven, e.g., when the trailer (11) is in park. That is, the auxiliary cooling fan (90) can be driven even when the generator (40) is stopped.

The operation panel (44a) and a display (44b) are provided in the second electric component box (44). The operation panel (44a) includes setting switches for various settings performed by a user, and the display (44b) displays various information such as an error code when a failure is caused. The opening/closing of the ventilation port (80) can be controlled by the switches of the operation panel (44a). The foregoing configuration is user-friendly because the switches etc. to be operated by the user are arranged so as to be concentrated. If a failure location can be identified based on the error code displayed in the display (44b) when the failure is caused, user-friendliness is enhanced by opening/closing only one of the doors of the front cover (32) closest to the failure location.

On the other hand, in the second machine chamber (36), the two electric compressors (22), the condenser (23), a radiator (45), and the two outside-compartment fans (26) are provided. Specifically, in the second machine chamber (36), the two electric compressors (22) are mounted in a middle position of the upper plate (55) in the horizontal direction. In addition, the radiator (45) and the condenser (23) are arranged in the front of the electric compressors (22). The condenser (23) is arranged between the two upper pillars (57). The middle inlet (32b) of the front cover (32) is positioned in the front of the condenser (23). The radiator (45) is arranged in the rear of the condenser (23), and serves as an air-cooling radiator for dissipating heat from the engine (41). Note that, in the trailer refrigerating apparatus (20), refrigerant pipes (e.g., a refrigerant pipe connecting the electric compressor (22) and the condenser (23) together) forming the refrigerant circuit (21) are arranged so as to be concentrated in an upper left space of the second machine chamber (36).

The two outside-compartment fans (26) are arranged so as to sandwich the two electric compressors (22). One of the two outside-compartment fans (26) is arranged closer to a left end of the upper plate (55), and the other outside-compartment fan (26) is arranged closer to a right end of the upper plate (55). The outside-compartment fan (26) is a so-called "propeller fan," and a rotation shaft thereof extends in the horizontal direction. A propeller is connected to an end portion of the rotation shaft of the outside-compartment fan (26) closer to the electric compressor (22), and a motor is connected to an opposite end portion. In the trailer refrigerating apparatus (20), a side on which the outside-compartment fan (26) faces the condenser (23) is an upstream side (i.e., a side under negative pressure).

The trailer refrigerating apparatus (20) further includes a duct (95), both ends of which open in the upstream side of the generator cooling fan (40a) and the inverter section (70), respectively. Specifically, as illustrated in FIG. 7, one end of the duct (95) opens near the inverter section (70) (more specifically, near the cooling fin attached to the switching device (70b)). As illustrated in FIG. 6, the duct (95) upwardly extends above the first electric component box (43) and penetrates the upper plate (55). The other end of the duct (95) opens on a left side, i.e., the upstream side of the outside-compartment fan (26).

### <In-Compartment Casing (33)>

As illustrated in FIG. 4, the in-compartment casing (33) is provided on a rear surface side of the outside-compartment casing (50) so as to face the in-compartment space (13) of the trailer (11). The in-compartment casing (33) is made of, e.g., glass fiber reinforced plastic (FRP) material. Note that the in-compartment casing (33) may be made of, e.g., other rein material or metal material. The in-compartment casing (33) has a shape defined along a rear surface of the outside-compartment casing (50).

A predetermined clearance is formed between a front surface of the in-compartment casing (33) and the rear surface of the outside-compartment casing (50), and a thermal insulator (34) is formed between the in-compartment casing (33) and the outside-compartment casing (50). After an enclosed space is formed between the outside-compartment casing (50) and the in-compartment casing (33), the enclosed space is filled with foamed resin, thereby integrally forming the thermal insulator (34) with the casing unit (31).

A dividing member (37) is attached on a rear surface side of the in-compartment casing (33). The dividing member (37) is arranged so as to apart from each of a rear surface of the in-compartment casing (33), an upper inner wall of the trailer (11), and a lower inner wall of the trailer (11) with a predetermined distance. This forms an inlet port (37a) below the dividing member (37), and forms an outlet port (37b) above the dividing member (37). In addition, an internal air flow path (38) is formed between the in-compartment casing (33) and the dividing member (37) so as to extend from the inlet port (37a) to the outlet port (37b).

In the internal air flow path (38), the evaporator (25) and the in-compartment fan (27) are provided. On the rear surface side of the protruding portion (52), the evaporator (25) is arranged so as to extend from the in-compartment casing (33) and the dividing member (37), and is supported by the in-compartment casing (33). The in-compartment fan (27) is provided above the evaporator (25). Note that, if a duct is provided between the in-compartment fan (27) and the ventilation port (80), more effective compartment ventilation is allowed by the in-compartment fan (27). In addition, when the trailer refrigerating apparatus (20) is in operation, even if the refrigerated vehicle (10) does not travel, the compartment ventilation is allowed.

### <Attachment Structure of Casing>

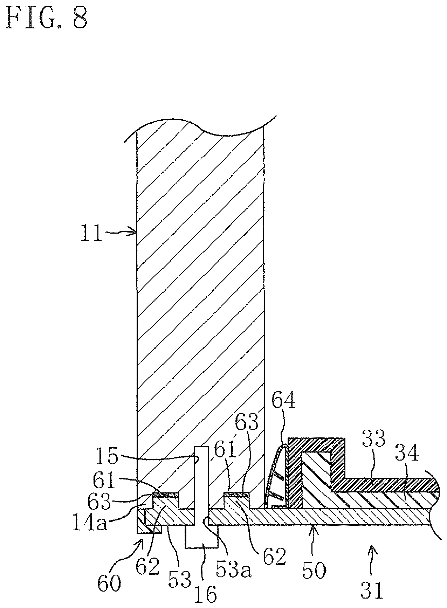

As described above, in the trailer refrigerating apparatus (20) of the present embodiment, the casing unit (31) is attached to the open section (14) of the trailer (11). An attachment structure of the casing unit (31) to the open section (14) of the trailer (11) will be described in detail with reference to FIG. 8. Note that FIG. 8 is an enlarged view illustrating a horizontal section near a side edge portion (14a) (see FIG. 2) on each of right and left sides of the trailer (11) in a width direction thereof.

In an attachment portion (60) of the side edge portion (14a) on each side of the open section (14) of the trailer (11) to the casing unit (31), two grooves (61) are formed in the trailer (11), and two raised portions (62) are formed in the casing unit (31).

The groove (61) vertically extends from an upper edge portion to a lower edge portion of the open section (14) of the trailer (11), and is formed so as to have a rectangular horizontal section. The two grooves (61) extend parallel to each other with a predetermined clearance.

On the other hand, the two raised portions (62) to be engaged with the grooves (61) are formed in the outside-compartment casing (50) of the casing unit (31). The raised portion (62) vertically extends from an upper end to a lower end of the outside-compartment casing (50), and is formed so as to have a rectangular horizontal section. The two raised portions (62) extend parallel to each other with a predetermined clearance. That is, the raised portion (62) has a shape corresponding to the groove (61) of the trailer (11), and is engaged with the groove (61) upon the attachment of the open section (14) of the trailer (11) to the casing unit (31).

The bolt (16) is provided in a middle portion between the two grooves (61) and between the two raised portions (62). That is, the two grooves (61) or the two raised portions (62) extend in an arrangement direction of a plurality of bolts (16) so as to sandwich the plurality of bolts (16) arranged in the vertical direction.

A sealing member (63) is interposed between the groove (61) and the raised portion (62) in an attachment state. For example, packing or a silicon seal is used as the sealing member (63). The sealing member (63) prevents cool air of the in-compartment space (13) of the trailer (11) from leaking to an outside of the compartment through a gap between the side edge portion (14a) of the trailer (11) and the outside-compartment casing (50).

In the in-compartment space (13), a sealing rubber (64) which is the sealing member is interposed between a side end portion of the in-compartment casing (33) and the side edge portion (14a) of the open section (14) of the trailer (11). Further, silicon is applied to a contact portion of a side end of the outside-compartment casing (50) and the side edge portion (14a) of the trailer (11). In the foregoing manner, the cool air leakage from the in-compartment space (13) to the outside of the compartment is prevented in the attachment portion (60).

### <<Operation>>

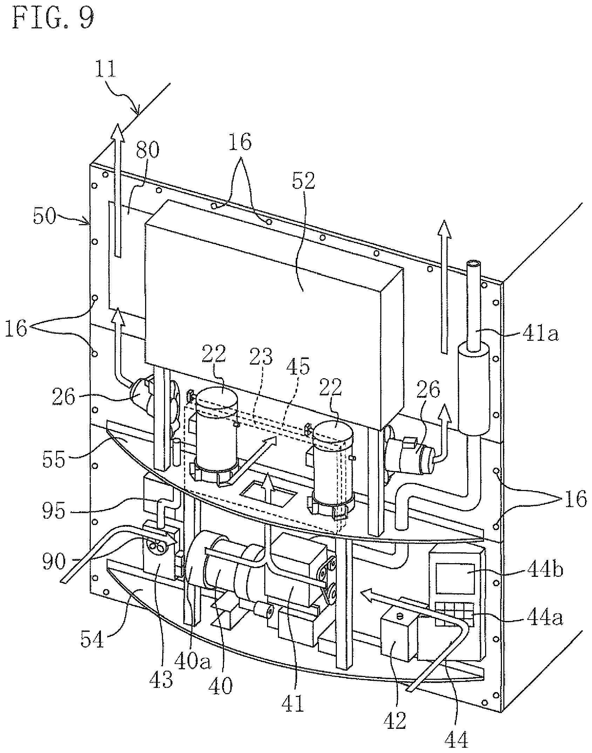

Next, an operation of the trailer refrigerating apparatus (20) will be described with reference to FIGS. 4 and 9.

### <Cooling of In-Compartment Space (13)>

When the generator (40) is driven by the engine (41), power is generated in the generator (40). Such power is supplied to the electric compressors (22), the outside-compartment fans (26), and the in-compartment fan (27). In the refrigerant circuit (21), the electric compressors (22) are operated to perform the refrigeration cycle.

Specifically, refrigerant compressed in the electric compressors (22) flows in the condenser (23). In the condenser (23), the refrigerant is condensed by dissipating heat to outside-compartment air. A pressure of the condensed refrigerant is reduced by passing through the expansion valve (24), and the refrigerant after the pressure reduction flows in the evaporator (25). In the evaporator (25), the refrigerant is evaporated by absorbing heat from in-compartment air. The evaporated refrigerant is re-compressed in the electric compressors (22).

When the in-compartment fan (27) is operated, in-compartment air of the in-compartment space (13) is sucked into the internal air flow path (38) through the inlet port (37a). The air sucked into the internal air flow path (38) upwardly flows and passes through the evaporator (25). In the evaporator (25), the in-compartment air is cooled by exchanging heat with refrigerant. The in-compartment air cooled in the evaporator (25) flows in an in-compartment space (S) through the outlet port (37b), and is used for refrigerating/freezing freight etc.

### <Cooling of Inverter Section (70) etc.>

The generator (40) is driven during the operation of the trailer refrigerating apparatus (20), and the generator cooling fan (40a) is also driven in association with the driving of the generator (40). This allows the generator cooling fan (40a) to suck air from the space at the rear end of the generator (40) and to send such air to the generator (40). Consequently, the generator (40) is cooled. Outside-compartment (outdoor) air is sucked into the machine chambers (35, 36) in association with an air flow generated in the foregoing state. Specifically, the outside-compartment air is sucked through the two side inlets (32c) and the middle inlet (32b) of the front cover (32). The air injected to the first machine chamber (35) through the left one of the two side inlets (32c) passes near the first electric component box (43), and, as a result, the inverter section (70) is cooled.

Similarly, when the outside-compartment fan (26) is operated, outside-compartment (outdoor) air is sucked into the machine chambers (35, 36). In such a case, the outside-compartment air is also sucked through the two side inlets (32c) and the middle inlet (32b) of the front cover (32). The air injected into the first machine chamber (35) through the left one of the two side inlets (32c) passes around the first electric component box (43), and is sent near the generator (40) and the engine (41). That is, the inverter section (70) is also cooled by the outside-compartment fan (26).

The air injected to the first machine chamber (35) through the right one of the two side inlets (32c) passes around the second electric component box (44), and is sent near the engine (41) and the generator (40). When air flows near the engine (41) and the generator (40), the engine (41) and the generator (40) are cooled by the air. The air used for cooling the engine (41) and the generator (40) upwardly flows in the communication port (55c) and is sent to the second machine chamber (36).

The air sucked into the second machine chamber (36) through the middle inlet (32b) passes through the condenser (23). In the condenser (23), refrigerant is condensed by dissipating heat to outside-compartment air. The air passing through the condenser (23) flows around the radiator (45), and is used for cooling the radiator (45). Then, such air joins the air passing through the communication port (55c).

The air joined in the second machine chamber (36) is branched into two in right and left directions so as to flow around the two compressors (22). The air branched in the left direction passes through an opening at an upper end of the front cover (32), and then is released to an outside of the outside-compartment casing (50). The air branched in the right direction passes around the exhaust muffler (41a). Then, such air passes through the opening at the upper end of the front cover (32), and is released to the outside of the outside-compartment casing (50).

Meanwhile, since an opening of the duct (95) closer to the outside-compartment fan (26) is under negative pressure, air around an opening of the duct (95) closer to the inverter section (70) is sucked into the duct (95). That is, the inverter section (70) is also cooled by an air flow through the duct (95).

When the auxiliary cooling fan (90) is driven, the auxiliary cooling fan (90) allows air to flow in a path similar to that in a case where the outside-compartment fan (26) is operated, thereby cooling the inverter section (70).

As described above, each of the outside-compartment fan (26), the generator cooling fan (40a), and the auxiliary cooling fan (90) cools the inverter section (70) by air outside the compartment of the trailer (11). That is, each of the three fans (26, 40a, 90) is an example of the cooling section of the present invention. Similarly, the duct (95) and the outside-compartment fan (26) together form the air flow near the inverter section (70). That is, a combination of the duct (95) and the outside-compartment fan (26) also cools the inverter section (70) by outside-compartment air, and therefore is also an example of the cooling section of the present invention.

### <Combination of Fans (26, 40a, 90)>

The outside-compartment fan (26), the generator cooling fan (40a), and the auxiliary cooling fan (90) may be combined and used depending on an operation state of the trailer refrigerating apparatus (20). For example, it is recognized that, when the switching device (70b) of the inverter section (70) is most likely to dissipate heat, an external air temperature is high, an in-compartment temperature is high, and a pull-down operation is performed. In such a case, all of the three fans (26, 40a, 90) may be used. Alternatively, the outside-compartment fan (26) and the generator cooling fan (40a) may be combined and used, or the generator cooling fan (40a) and the auxiliary cooling fan (90) may be combined and used.

An operation of the fan may be controlled by detecting a temperature of the switching device (70b). For example, a control is allowed, in which the auxiliary cooling fan (90) is turned on when the temperature of the switching device (70b) exceeds a certain threshold temperature (e.g., 80°C), and is turned off when the temperature of the switching device (70b) falls below a certain temperature (e.g., 65°C).

Note that, when the switching device (70b) can be sufficiently cooled by air generated while the refrigerated vehicle (10) travels, the auxiliary cooling fan (90) etc. may be stopped.

For example, when the refrigerated vehicle (10) is in park, power is supplied to the trailer refrigerating apparatus (20) from the stand-by power supply. At this point, the engine (41) is stopped, and the generator (40) is not driven. That is, an air flow generated by the generator cooling fan (40a) is stopped. The auxiliary cooling fan (90) of the present embodiment can be driven by the stand-by power supply. Thus, when the generator (40) is not driven, e.g., when the refrigerated vehicle (10) is in park, the inverter section (70) may be cooled by the auxiliary cooling fan (90).

### <<Advantages of the Present Embodiment>>

As described above, according to the present embodiment, the inverter section (70) can be cooled by using the outside-compartment fan (26) or the generator cooling fan (40a). In particular, in the present embodiment, the inverter section (70) is arranged upstream the generator (40) having a thermal capacity larger than that of the inverter section (70), and therefore the more efficient cooling of the inverter section (70) is allowed.

By providing the auxiliary cooling fan (90), the cooling of the inverter section (70) can be ensured, e.g., when cooling capacities of the outside-compartment fan (26) and the generator cooling fan (40a) are insufficient or when the refrigerated vehicle (10) is in park.

In the present embodiment, the inverter section (70), the generator (40), etc. for which cooling is required are arranged in a lower portion of the casing unit (31), and an air flow from bottom to top is formed in the casing unit (31). Thus, the efficient cooling is allowed in the trailer refrigerating apparatus (20).

In the trailer refrigerating apparatus (20), the refrigerant pipes forming the refrigerant circuit (21) are arranged so as to be concentrated in the upper left space of the second machine chamber (36). The muffler body of the exhaust muffler (41a) is positioned in the space closer to the upper right side in the second machine chamber (36). That is, in the present embodiment, an influence on each of the refrigerant pipes (i.e., an influence on the refrigerant circuit (21)) due to heat generated by exhaust air of the engine having a relatively-high temperature (e.g., 200°C) can be reduced.

In the present embodiment, a generator using an efficient power generation method can be employed as the generator (40), and products for general purpose use can be employed as, e.g., motors of the generator (40), the electric compressor (22), and the auxiliary cooling fan (90). That is, in a conventional trailer refrigerating apparatus, a generator is typically driven at about two levels of engine speed, and selection of the generator, an electric compressor, a fan, etc. is limited. In addition, the generator using the efficient power generation method is not necessarily employed. However, in the present embodiment, the AC power having the predetermined voltage and the predetermined frequency can be obtained by the inverter section (70), thereby selecting the generator using the efficient power generation method as the generator (40). Thus, an energy-saving effect can be expected. In addition, by obtaining the AC power having the predetermined voltage and the predetermined frequency, the products for general purpose use can be employed as, e.g., the motors of the generator (40), the electric compressor (22), and the auxiliary cooling fan (90). This reduces degradation (e.g., insulation breakdown) of the generator etc. in the present embodiment.

### <<Other Embodiment>>

A configuration of the trailer refrigerating apparatus (20), e.g., the number of fans such as the auxiliary cooling fan (90) has been set forth merely for purposes of examples. For example, more fans may be provided as compared to the foregoing embodiment, or a fan having another configuration may be employed.

### INDUSTRIAL APPLICABILITY

The present invention is useful as the trailer refrigerating apparatus for cooling the in-compartment space of the trailer.

### DESCRIPTION OF REFERENCE CHARACTERS

- 11: Trailer
- 13: In-Compartment Space
- 20: Trailer Refrigerating Apparatus
- 21: Refrigerant Circuit
- 22: Electric Compressor
- 23: Condenser
- 26: Outside-Compartment Fan
- 31: Casing Unit
- 40: Generator
- 40a: Generator Cooling Fan
- 41: Engine
- 70: Inverter Section
- 90: Auxiliary Cooling Fan
- 95: Duct

## Claims

1. A trailer refrigerating apparatus including a refrigerant circuit (21) and cooling an in-compartment space (13) of a trailer (11), comprising:
a generator (40);
an engine (41) for driving the generator (40);
an inverter section (70) for converting power output from the generator (40) and outputting the power;
an electric compressor (22) to be driven by the power output from the inverter section (70);
a condenser (23) for heat exchange between air outside the compartment of the trailer (11) and refrigerant; **characterized by**
a casing unit (31) having a first machine chamber (35) in which the generator (40), the engine (41) and the inverter section (70) are accommodated and a second machine chamber (36) in which the electric compressor (22) and the condenser (23) are accommodated; and
a cooling section (26, 40a, 90, 95) for cooling the inverter section (70) by air outside a compartment of the trailer (11) injected into the first machine chamber (35), wherein air outside a compartment of the trailer (11) is sucked into the second machine chamber (36), passes through the condenser (23) and is then joined with the air used for cooling the inverter section (70) sent to the second machine chamber (36).

2. The trailer refrigerating apparatus of claim 1, wherein
the generator (40) includes a generator cooling fan (40a) for cooling the generator (40) by air outside the compartment, and
the cooling section (26, 40a, 90, 95) is the generator cooling fan (40a).

3. The trailer refrigerating apparatus of claim 2, wherein
the inverter section (70) is arranged upstream the generator cooling fan (40a).

4. The trailer refrigerating apparatus of claim 1, wherein
the cooling section (26, 40a, 90, 95) is an outside-compartment fan (26) for the condenser (23) of the refrigerant circuit (21).

5. The trailer refrigerating apparatus of claim 4, wherein
the cooling section (26, 40a, 90, 95) further includes a duct (95), both ends of which open in an upstream side of the outside-compartment fan (26) and the inverter section (70), respectively.

6. The trailer refrigerating apparatus of claim 2, wherein
the cooling section (26, 40a, 90, 95) further includes an auxiliary cooling fan (90) for injecting air outside the compartment to the inverter section (70).

7. The trailer refrigerating apparatus of claim 6, wherein
the auxiliary cooling fan (90) is configured to be driven when the generator (40) is stopped.

8. The trailer refrigerating apparatus of claim 6, wherein
the cooling section (26, 40a, 90, 95) starts the auxiliary cooling fan (90) when a temperature of the inverter section (70) exceeds a predetermined threshold.

## Patentansprüche

1. Anhängerkühlvorrichtung einschließlich eines Kühlkreisle (21) und das Kühlen eines Innenabteilraums (13) eines Anhängers (11), umfassend:
einen Generator (40);
eine Maschine (41) zum Antreiben des Generators (40);
einen Wechselrichterabschnitt (70) zur Umwandlung der von dem Generator (40) ausgegebenen Leistung und zur Ausgabe der Leistung;
einen elektrischen Kompressor (22), der durch die von dem Wechselrichterabschnitt (70) ausgegebene Leistung angetrieben wird;
einen Kondensator (23) zum Wärmeaustausch zwischen Luft außerhalb des Abteils des Anhängers (11) und Kältemittel; charakterisiert durch
eine Gehäuseeinheit (31), die eine erste Maschinenkammer (35) aufweist, in der der Generator (40), der Motor (41) und der Wechselrichterabschnitt (70) untergebracht sind und eine zweite Maschinenkammer (36), in der der elektrische Kompressor (22) und der Kondensator (23) untergebracht sind; und
einen Kühlabschnitt (26, 40a, 90, 95) zur Kühlung des Wechselrichterabschnitts (70) durch Luft außerhalb eines Abteils des Anhängers (11), die in die erste Maschinenkammer (35) injiziert wird,
wobei Luft außerhalb eines Abteils des Anhängers (11) in die zweite Maschinenkammer (36) gesaugt wird, durch den Kondensator (23) strömt und dann mit der zur Kühlung des zu der zweiten Maschinenkammer (36) gesendeten Wechselrichterabschnitts (70) verwendeten Luft verbunden wird.

2. Anhängerkühlvorrichtung nach Anspruch 1, wobei
der Generator (40) einen Generatorkühllüfter (40a) zur Kühlung des Generators (40) durch Luft außerhalb des Abteils einschließt, und
der Kühlabschnitt (26, 40a, 90, 95) der Generatorkühllüfter (40a) ist.

3. Anhängerkühlvorrichtung nach Anspruch 2, wobei
der Wechselrichterabschnitt (70) stromaufwärts des Generatorkühllüfters (40a) angeordnet ist.

4. Anhängerkühlvorrichtung nach Anspruch 1, wobei
der Kühlabschnitt (26, 40a, 90, 95) ein Außenabteillüfter (26) für den Kondensator (23) des Kühlmittelkreises (21) ist.

5. Anhängerkühlvorrichtug nach Anspruch 4, wobei
der Kühlabschnitt (26, 40a, 90, 95) weiter eine Leitung (95) einschließt, deren beide Enden sich auf einer stromaufwärtigen Seite des Außenabteillüfters (26) bzw. des Wechselrichterabschnitts (70) öffnen.

6. Anhängerkühlvorrichtung nach Anspruch 2, wobei
der Kühlabschnitt (26, 40a, 90, 95) weiter einen Hilfskühllüfter (90) zum Injizieren von Luft außerhalb des Abteils in den Wechselrichterabschnitt (70) einschließt.

7. Anhängerkühlvorrichtung nach Anspruch 6, wobei
der Hilfskühllüfter (90) konfiguriert ist, um angetrieben zu werden, wenn der Generator (40) gestoppt wird.

8. Anhängerkühlvorrichtung nach Anspruch 6, wobei
der Kühlabschnitt (26, 40a, 90, 95) den Hilfskühllüfter (90) startet, wenn eine Temperatur des Wechselrichterabschnitts (70) einen vorbestimmten Schwellenwert überschreitet.

## Revendications

1. Appareil frigorifique pour remorque incluant un circuit de réfrigérant (21) et refroidissant un espace de compartiment intérieur (13) d'une remorque (11), comprenant :
un générateur (40) ;
un moteur (41) pour entraîner le générateur (40) ;
une section d'onduleur (70) pour transformer l'énergie délivrée en sortie à partir du générateur (40) et pour délivrer l'énergie en sortie ;
un compresseur électrique (22) pour être entraîné par l'énergie délivrée en sortie à partir de la section d'onduleur (70) ;
un condenseur (23) pour un échange de chaleur entre l'air à l'extérieur du compartiment de la remorque (11) et le réfrigérant ; **caractérisé par**
une unité formant enveloppe (31) ayant une première chambre des machines (35) dans laquelle le générateur (40), le moteur (41) et la section d'onduleur (70) sont logés et une seconde chambre des machines (36) dans laquelle le compresseur électrique (22) et le condenseur (23) sont logés ; et
une section de refroidissement (26, 40a, 90, 95) pour refroidir la section d'onduleur (70) par de l'air à l'extérieur d'un compartiment de la remorque (11) injecté dans la première chambre des machines (35),
dans lequel
de l'air à l'extérieur d'un compartiment de la remorque (11) est aspiré dans la seconde chambre des machines (36), passe à travers le condenseur (23) et est ensuite joint à l'air utilisé pour refroidir la section d'onduleur (70) envoyé à la seconde chambre des machines (36).

2. Appareil frigorifique pour remorque selon la revendication 1, dans lequel
le générateur (40) inclut un ventilateur de refroidissement de générateur (40a) pour refroidir le générateur (40) par l'air à l'extérieur du compartiment, et
la section de refroidissement (26, 40a, 90, 95) est le ventilateur de refroidissement de générateur (40a).

3. Appareil frigorifique pour remorque selon la revendication 2, dans lequel
la section onduleur (70) est agencée en amont du ventilateur de refroidissement de générateur (40a).

4. Appareil frigorifique pour remorque selon la revendication 1, dans lequel
la section de refroidissement (26, 40a, 90, 95) est un ventilateur de compartiment extérieur (26) pour le condenseur (23) du circuit de réfrigérant (21).

5. Appareil frigorifique pour remorque selon la revendication 4, dans lequel
la section de refroidissement (26, 40a, 90, 95) inclut en outre un conduit (95), dont les deux extrémités s'ouvrent respectivement dans un côté amont du ventilateur de compartiment extérieur (26) et de la section d'onduleur (70).

6. Appareil frigorifique pour remorque selon la revendication 2, dans lequel
la section de refroidissement (26, 40a, 90, 95) inclut en outre un ventilateur de refroidissement auxiliaire (90) pour injecter de l'air à l'extérieur du compartiment jusqu'à la section d'onduleur (70).

7. Appareil frigorifique pour remorque selon la revendication 6, dans lequel
le ventilateur auxiliaire (90) est configuré pour être entraîné lorsque le générateur (40) est arrêté.

8. Appareil frigorifique pour remorque selon la revendication 6, dans lequel
la section de refroidissement (26, 40a, 90, 95) démarre le ventilateur auxiliaire (90) quand une température de la section d'onduleur (70) dépasse un seuil prédéterminé.
